(19) Europäisches Patentamt
European Patent Office
Office européen des brevets

(11) EP 2 431 136 A2

(12) EUROPÄISCHE PATENTANMELDUNG

(43) Veröffentlichungstag:
21.03.2012 Patentblatt 2012/12

(51) Int Cl.:
*B25J 9/16* (2006.01)

(21) Anmeldenummer: 11179562.1

(22) Anmeldetag: 31.08.2011

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(30) Priorität: 15.09.2010 DE 102010037548

(71) Anmelder: Walter Maschinenbau GmbH
72072 Tübingen (DE)

(72) Erfinder: Marx, Christian
72770 Reutlingen (DE)

(74) Vertreter: Rüger, Barthelt & Abel
Webergasse 3
73728 Esslingen (DE)

(54) **Verfahren zum Betreiben einer Greifeinrichtung**

(57) Die vorliegende Erfindung betrifft ein Verfahren zum Betrieb einer Greifeinrichtung (10). Diese dient dazu, Rohlinge (18) an einer Arbeitsposition zu positionieren, beispielsweise in ein Spannfutter (35) einzusetzen. Hierfür wird bei der Initialisierung der Greifeinrichtung (10) eine Abweichungsfunktion (F) bestimmt, die ausschließlich für die Arbeitsposition die beladungsabhängige Abweichung des Rohlings (18) von seiner gewünschten Soll-Position zu der in der Greifeinrichtung gemessenen Position angibt. Über die Abweichungsfunktion (F) kann während des Betriebs der Greifeinrichtung (10) beim Positionieren der Rohlinge (18) an der Arbeitsposition ein Abweichungswert ($\Delta za$) bestimmt und die in der Greifeinrichtung (10) gemessene Position um den Abweichungswert ($\Delta za$) korrigiert werden, so dass eine genaue Positionierung des Rohlings (18) ermöglicht ist.

Fig.2

EP 2 431 136 A2

**Beschreibung**

Die Erfindung betrifft ein Verfahren zum Betreiben einer Greifeinrichtung. Die Greifeinrichtung weist einen Greifarm oder Manipulator mit mehreren dreh- oder schwenkbar miteinander verbundenen Gliedern auf. Zwischen jeweils zwei benachbarten Gliedern ist ein Verstellantrieb mit einer Dreh- oder Schwenkachse angeordnet, so dass die beiden über den Verstellantrieb verbundenen Glieder relativ zueinander um die Achse drehbar oder schwenkbar sind. Die Anzahl der Verstellantriebe kann variieren. Beispielsweise können fünf oder sechs Verstellantriebe vorgesehen sein.

Die Greifeinrichtung kann für verschiedene Aufgaben verwendet werden. Sie kann zum Beispiel dazu dienen, Rohlinge aus einer Palette zu entnehmen und in eine Spanneinrichtung einer Bearbeitungsmaschine einzusetzen bzw. umgekehrt bearbeitete Werkstücke aus der Spanneinrichtung zu entnehmen und in der Palette abzulegen. Zu diesem Zweck weist die Greifeinrichtung einen Greifer mit zumindest einer und beispielsgemäß zwei Greifzangen auf. Bei einigen Anwendungen werden in der Bearbeitungsmaschine unterschiedlich große Rohling bearbeitet. Das vom Greifarm zu tragende Gewicht ist daher verschieden. Dies hat Auswirkungen auf die Positioniergenauigkeit des Greifers. Es hat sich herausgestellt, dass bereits bei Beladungsunterschieden von einigen Kilogramm beim Einsetzen eines Rohlings in die Spanneinrichtung Positionsabweichungen von bis zu etwa zwei Millimetern auftreten können. Beim Einsetzen von Rohlingen in eine Spanneinrichtung kann es dabei durch wiederhol Spanneinrichtung zu Beschädigungen oder zumindest erhöhtem Verschleiß an der Spanneinrichtung kommen. Bei einem als Spanneinrichtung dienenden Spannfutter kann der Rundlauf beeinträchtigt werden und kostspielige Reparaturen nach sich ziehen. Durch die vorliegende Erfindung soll dies vermieden werden.

Aus DE 10 2007 026 114 A1 ist es bekannt, anhand der Motorstromaufnahme eines Motors eines Robotorarms auf die getragene Last zu schließen. Wegen der Proportionalität des Motorstroms zum Drehmoment und der bekannten Geometrie des Robotorarms kann die Last berechnet werden. In einer Recheneinheit kann dann die Kompensation des elastischen Verformung durch die Last bei der Positionierung berücksichtig werden. Genaue Angaben über die Funktionsweise der Kompensation werden nicht gemacht.

Zur Kompensation von Fehlern einer Positionsregelung bei einer Maschine mit mindestens einer Achse wird in DE 103 12 025 A1 vorgeschlagen die Verformung der Maschine in Abhängigkeit von den die Verformung verursachenden Größen in allen Raumrichtungen zu berechnen. Dies kann beispielsweise mit Hilfe einer Finite-Elemente-Methode (FEM) oder einer Randelementmethode (REM) erfolgen. Damit können nicht nur Längsdehnungen, sondern auch Biegungen oder Torsionen und andere komplexe Verformungszustände der Maschine ermittelt und quantifiziert werden. Allerdings benötigt dieses Verfahren einen erheblichen Programmieraufwand. Außerdem wird beim Betrieb der Maschine eine erhebliche Rechenleistung zur kontinuierlichen Berechnung der aktuellen Verformung benötigt.

Ausgehend hiervon kann es als eine Aufgabe der vorliegenden Erfindung angesehen werden, ein Verfahren bereits zustellen, das eine sehr einfache und exakte Positionierung eines Werkstücks oder eines Rohlings an einer Arbeitsposition gestattet, unabhängig von der Beladung des Greifarms.

Diese Aufgabe wird durch ein Verfahren mit den Merkmalen des Patentanspruches 1 und des Patentanspruches 13 gelöst. Unabhängig davon betrifft die Erfindung auch eine Greifeinrichtung, die zur Durchführung der Verfahren eingerichtet ist.

Erfindungsgemäß wird beim Verfahren nach Patentanspruch 1 eine Abweichungsfunktion bestimmt. Die Abweichungsfunktion beschreibt die Änderung der Position des am freien Ende des Greifarms angeordneten Greifers abhängig von dessen Beladung. Die Positionsänderung bezieht sich dabei insbesondere in die vertikale Z-Richtung, in der die Gewichtskraft der am Greifer getragenen Last wirkt. Die Abweichungsfunktion wird erfindungsgemäß durch wenigstens zwei Positionsmessungen mit unterschiedlichen Beladungen des Greifers durchgeführt. Bei beiden Positionsmessungen befindet sich der Greifer in derselben vorgegebenen Messposition, die vorzugsweise im Wesentlichen der Position entspricht, in der das Werkstück oder der Rohling an einer Arbeitsposition positioniert werden soll. In der Messposition haben die Glieder des Greifarms eine vorgegebene Relativlage zueinander.

Beispielsweise wird bei jedem Beladungszustand ein Positionswert in Z-Richtung im Koordinatensystem der Greifeinrichtung gemessen. Wegen der unterschiedlichen Beladung unterscheiden sie die gemessenen Positionswerte. Aus diesen beiden gemessen Positionswerten kann dann die Abweichungsfunktion, insbesondere als lineare Abweichungsfunktion ermittelt werden. Diese Abweichungsfunktion kann anschließend beim Beladen und Entladen von Rohlingen an der Arbeitsposition verwendet werden, um abhängig von der aktuellen Beladung den im Koordinatensystem der Greifeinrichtung gemessenen Positionswert zu korrigieren und auf diese Weise eine exakte Positionierung des Werkstücks oder des Rohlings zu erreichen.

Zwar gilt die so bestimmte Abweichungsfunktion nur in einem kleinen räumlichen Bereich um die Arbeitsposition herum. Denn die auf diese Weise bestimmte Abweichungsfunktion ist nur dann ausreichend genau, wenn die Glieder des Greifarms im Wesentlichen die in der Messposition und der Arbeitsposition vorgegebene Relativlage einnehmen. Werden die Glieder über die Verstellantriebe in eine andere Relativlage gebracht, so ändert sich die Steifigkeit des Greifarms, so dass die Abweichungsfunktion keine ausreichende Genauigkeit mehr hat. Bei einer vorteilhaften Ausgestaltung kann auch für mehrere Arbeitspositionen im Arbeitsbereich der Greifeinrichtung jeweils eine zugeordnete Abweichungsfunktion bestimmt werden. Beim Betrieb der Greifeinrichtung ist es häufig ausreichend, eine hohe Positioniergenauigkeit im Bereich von einigen hundertstel oder zumindest einigen zehntel Millimetern an einer oder gegebenenfalls mehreren Arbeitspositionen zu erreichen. Beim Transport des Rohlings oder des Werkstücks zwischen solchen Arbeitspositionen muss lediglich eine Kollisionsfreiheit mit anderen Maschinenelementen sichergestellt werden, wobei jedoch eine Genauigkeit im Bereich von einigen Millimetern ausreicht. Daher bietet die vorliegende Erfindung eine äußerst einfache Möglichkeit mit sehr geringem Programmieraufwand eine exakte Positionierung der Werkstücke oder der Rohlinge an einer oder mehreren Arbeitspositionen zu erreichen.

Die ermittelte Abweichungsfunktion berücksichtigt auch Bauteiltoleranzen der Greifeinrichtung. Gelenke, Lager und andere Bauelemente sind auch bei Greifeinrichtungen des gleichen Typs nicht identisch und können daher nicht durch ein einziges Rechenmodell ausreichend genau angegeben werden. Durch das erfindungsgemäße Bestimmen der Abweichungsfunktion bei der Initialisierung der Greifeinrichtung werden solche Bauteiltoleranzen automatisch berücksichtigt. Die Greifeinrichtung kann vor Ort sehr einfach eingelernt werden. Nach dem Einlernen steht für jede vorgegebene Arbeitsposition die entsprechende Abweichungsfunktion bereit und im Betrieb der Greifeinrichtung ist somit ein exaktes Positionieren der Rohlinge und Werkstücke an den vorhandenen Arbeitspositionen sichergestellt.

Bei einer bevorzugten Ausführungsform erfolgt das Bestimmen der Abweichungsfunktion wie folgt: In einem ersten Beladungszustand wird eine Drehmomentgröße eines Verstellantriebs des Greifarms erfasst, die die aktuelle Beladung des Greifers im ersten Beladungszustand beschreibt. Anschließend wird der Greifer bzw. der Greifarm in die vorgegebene Messposition bewegt, wobei die Glieder des Greifarms eine vorgegebene Relativposition zueinander einnehmen. In der Messposition wird ein erster Positionswert des Greifers im ersten Beladungszustands im Koordinatensystem des Greifarms erfasst. Aus der bekannten Istposition, die der Greifer in der Messposition tatsächlich einnimmt, und dem gemessenen ersten Positionswert kann ein erster Abweichungswert ermittelt werden. Anschließend werden die beschriebenen Schritte in einem zweiten Beladungszustand wiederholt, wodurch sich ein zweiter Abweichungswert für den zweiten Beladungszustand ergibt. Aus diesen beiden Abweichungswerten und den beiden Drehmomentgrößen kann dann eine vorzugsweise lineare Abweichungsfunktion ermittelt werden, die den Abweichungswert abhängig von der Drehmomentgröße beschreibt. Eine solche lineare Abweichungsfunktion ist besonders einfach mit wenig Rechenaufwand zu ermitteln. Die Abweichungsfunktion kann als Gleichung oder in Form einer Tabelle in eine Steuereinheit der Greifeinrichtung abgelegt werden. Die Abweichungsfunktion wird dann im weiteren Betrieb der Greifeinrichtung zum Positionieren des Greifers bzw. der am Greifer gehaltenen Rohlinge oder Werkstücke in der betreffenden Arbeitsposition des Greifarms verwendet.

Vorzugsweise ist der Greifer im ersten Beladungszustand unbeladen, das heißt der Greifer trägt keinerlei Ladung. Im zweiten Beladungszustand ist der Greifer insbesondere mit der maximal beim Betrieb der Greifeinrichtung auftretenden Last beladen. Bei einem bevorzugten Ausführungsbeispiel weist der Greifer zwei Greifzangen auf. Die maximale Beladung besteht dabei aus zwei Rohlingen oder Werkstücken mit der jeweils größten zu transportierenden Masse.

Um die Messposition für den Greifer bzw. den Greifarm genau zu definieren wird dieser bei einem bevorzugten Verfahren gegen ein Anschlagelement bewegt. Vorzugsweise wird der Greifer in etwa in vertikaler Richtung von oben gegen das Anschlagelement bewegt. Das Anschlagelement ist insbesondere an der Stelle angeordnet, an der sich der Greifer in der Arbeitsposition des Greifarms befindet und für die die Abweichungsfunktion bestimmt werden soll. Beispielsweise kann das Anschlagelement von einem in ein Spannfutter eingespannten Körper, beispielsweise Rohling, gebildet sein.

Es ist von Vorteil, wenn sich die Glieder des Greifarms zum Bestimmen der Drehmomentgrößen in einer vorgegebenen Momenterfassungslage befinden. In der Momenterfassungslage kann die Relativposition bzw. Relativlage der Glieder des Greifarms zueinander im Wesentlichen der Relativlage der Glieder in der Arbeitsposition und/oder Messposition entsprechen, derart, dass die Steifigkeit und die Elastizität des Greifarms in der Momenterfassungslage und der Arbeitsposition und/oder Messposition vergleichbar sind. Auf diese Weise kann eine weitere Verbesserung der Genauigkeit beim Bestimmen der Abweichungsfunktion erreicht werden.

Bei einer bevorzugten Ausgestaltung ist die Achse des Verstellantriebs, der zum Bestimmen der Drehmomentgrößen verwendet wird, während des Bestimmens der Drehmomentgrößen im Wesentlichen horizontal ausgerichtet. Die Gewichtskraft der Beladung des Greifers wirkt dabei rechtwinklig zur Achse nach unten. Der Schwerpunkt der Beladung befindet sich außerhalb der Vertikalebene, die die Achse enthält. Dies ermöglichte eine genaue Ermittlung der Drehmomentgröße abhängig von der Gewichtskraft der Beladung.

Das Verfahren vereinfacht sich weiter, wenn ausschließlich ein einziger Verstellantrieb der Greifeinrichtung für das Bestimmen der Drehmomentgrößen verwendet wird. Bevorzugt werden die Drehmomentgrößen über einen Verstellantrieb bestimmt, der möglichst nahe am Greifer angeordnet ist. Insbesondere wird derjenige Verstellantrieb gewählt, der dem Greifer am nächsten liegt und dessen Achse den Greifer nicht schneidet. Vorzugsweise befindet sich zwischen dem für die Bestimmung der Drehmomentgrößen verwendeten Verstellantrieb und dem Greifer höchstens ein weiterer Verstellantrieb. Die Spreizung der Drehmomentgrößen bei unterschiedlichen Beladungszuständen ist bei dieser Ausgestaltung des Verfahrens ausreichend groß, um eine genaue Abweichungsfunktion ermitteln zu können. Da sich die Übersetzungen der einzelnen Verstellantriebe zu einer Gesamtübersetzung multiplizieren, die größer als i=1 sein kann, nimmt die Spreizung der Drehmomentgröße durch Belastungsunterschiede am Greifer ab, je mehr Verstellantriebe mit Getriebestufe zwischen dem zur Messung verwendeten Verstellantrieb und dem Greifer zwischengeschaltet sind. Es hat sich gezeigt, dass dies für die Bestimmung der Drehmomentgrößen und damit die Genauigkeit der Abweichungsfunktion nachteilig ist, auch wenn der Hebelarm zwischen der Beladung und dem zur Messung verwendeten Verstellantrieb bei mehreren zwischengeschalteten Gliedern und Verstellantrieben zunimmt.

Beim Verfahren zum Betrieb der Greifeinrichtung wird die vorgegebene oder ermittelte Abweichungsfunktion für das Aufnehmen und/oder Ablegen eines Werkstücks oder eines Rohlings verwendet. Insbesondere werden folgende Schritte durchgeführt:

- Zunächst wird ein Rohling oder ein Werkstück mit dem Greifer ergriffen. Häufig kann dabei die beladungsabhängige Abweichung unberücksichtigt bleiben, beispielsweise wenn der Rohling oder das Werkstück aus einer Palette entnommen wird und ausreichend Platz verfügbar ist.

- Anschließend wird eine für die Beladung des Greifers charakteristische Drehmomentgröße ermittelt. Hierfür wird vorzugsweise der Verstellantrieb verwendet, über den auch die Drehmomentgrößen beim Bestimmen der Abweichungsfunktion ermittelt wurden.

- Aus der vorgegebenen Abweichungsfunktion wird abhängig von der zuvor ermittelten Drehmomentgröße ein Abweichungswert bestimmt.

- Dieser Abweichungswert wird zu dem im Koordinatensystem der Greifeinrichtung gemessenen aktuellen Positionswert addiert, um den Rohling oder das Werkstück an der Arbeitsposition exakt positionieren zu können. Die Relativlage der Glieder stimmen in der Arbeitsposition im Wesentlichen mit der Relativlage der Glieder des Greifarms in der Messposition überein.

Vorteilhafte Ausgestaltungen der vorliegenden Erfindung ergeben sich aus den abhängigen Patentansprüchen sowie der Beschreibung. Die Beschreibung beschränkt sich auf wesentliche Merkmale der Erfindung sowie sonstiger Gegebenheiten. Die Zeichnung ist ergänzend heranzuziehen. Es zeigen:

Figur 1 eine perspektivische Darstellung eines Greifarms mit einer Palette sowie einer schematisch dargestellten Spanneinrichtung einer Werkzeugmaschine,

Figur 2 ein Blockschaltbild der Greifeinrichtung in der Messposition im Bereich der Spanneinrichtung der Werkzeugmaschine,

Figur 3 eine schematische Draufsicht auf den Greifer mit maximaler Beladung in der Messposition,

Figur 4 den Greifer aus Figur 3 in einer Momenterfassungslage,

Figur 5 das Blockschaltbild eines Verstellantriebs und

Figur 6 die schematische Darstellung einer beispielhaften linearen Abweichungsfunktion.

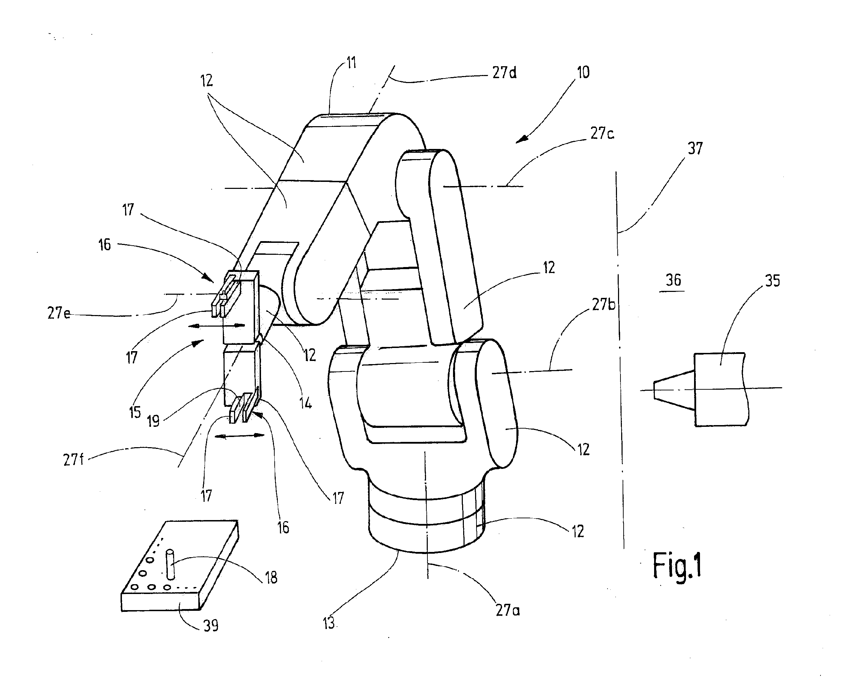

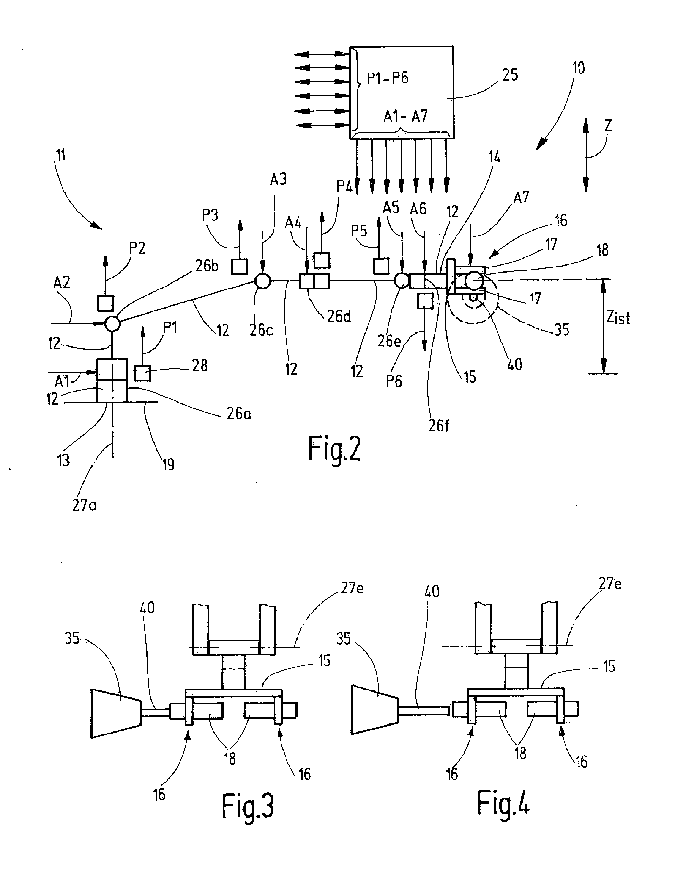

In den Figuren 1 und 2 ist ein Ausführungsbeispiel einer Greifeinrichtung 10 mit einem Greifarm 11 veranschaulicht. Der Greifarm 11 weist mehrere drehbar oder schwenkbar miteinander verbundene Glieder 12 auf. Ein Befestigungsende 13 des Greifarms 11 ist an einer Befestigungsfläche 19 fixiert. An seinem dem Befestigungsende 13 entgegengesetzten freien Ende 14 trägt der Greifarm 11 einen Greifer 15. Der Greifer 15 weist zumindest eine und beispielsgemäß zwei Greifzangen 16 auf, die unabhängig voneinander betätigbar sind. Jede Greifzange 16 verfügt über zwei relativ zueinander verschiebbare Zangenschenkel 17 zwischen denen ein Rohling 18 oder ein bearbeitetes Werkstück eingeklemmt und gehalten werden kann. Beim Ausführungsbeispiel sollen insbesondere zylindrische Teile durch die Greifzangen 16 gehalten werden. Einer der Zangenschenkel 17 kann deswegen eine prismatische Ausnehmung aufweisen, so dass ein sicheres Halten und Positionieren des zylindrischen Rohlings 18 oder Werkstücks gewährleistet ist.

Die Greifeinrichtung 10 weist mehrere durch eine Steuereinheit 25 ansteuerbare Verstellantriebe 26 auf. Bei dem hier beschriebenen Ausführungsbeispiel sind sechs Verstellantriebe 26a bis 26f vorgesehen, wobei jeder Verstellantrieb zwei benachbarte Glieder 12 des Greifarms 11 um jeweils eine zugeordnete Dreh- oder Schwenkachse 27a bis 27f drehbar oder schwenkbar miteinander verbindet. Die Ansteuerung der Verstellantriebe 26a bis 26f erfolgt durch Ansteuersignale A1 bis A6 der Steuereinheit 25. Die Greifzangen 16 werden über ein weiteres Ansteuersignal A7 geöffnet oder geschlossen. Zur Positionierung des Greifers 15 bzw. eines im Greifer 15 gehaltenen Rohlings 18 erhält die Steuereinheit 25 Positionssignale P1 bis P6 von Positionssensoren 28. Beim Ausführungsbeispiel ist jedem Verstellantrieb 26a bis 26f ein Positionssensor 28 zugeordnet.

Der erste Verstellantrieb 26a folgt unmittelbar auf das an der Befestigungsfläche 19 fixierte Ende des Greifarms 11. Er ist als Drehantrieb ausgeführt, wobei seine Drehachse 27a im Wesentlichen vertikal verläuft. Über ein Glied 12 ist der erste Verstellantrieb 26a mit einem zweiten Verstellantrieb 26b verbunden, der über ein weiteres Glied 12 mit einem dritten Verstellantrieb 26c verbunden ist. Der zweite und der dritte Verstellantrieb 26b und 26c sind als Schwenkantriebe ausgestaltet, deren Schwenkachsen 27b bzw. 27c im Wesentlichen parallel zueinander und rechtwinklig zur Drehachse 27a des ersten Verstellantriebs 26a verlaufen. Der vierte Verstellantrieb 26d ist als Drehantrieb ausgestaltet und sitzt zwischen zwei Gliedern 12, die den dritten Verstellantrieb 26c mit einem fünften Verstellantrieb 26e ausgebildeten verbinden, der einen Schwenkantrieb darstellt. Die Drehachse 27d des vierten Verstellantriebs 26d ist rechtwinklig zu den Schwenksachsen 27c und 27e des dritten und fünften Verstellantriebs 26c bzw. 26e ausgerichtet. Schließlich ist ein sechster Verstellantrieb 26f vorhanden, der zwischen dem fünften Verstellantrieb 26e und dem Greifer angeordnet ist, und als Drehantrieb ausgestaltet ist. Seine Drehachse 27f durchsetzt den Greifer 15 in etwa mittig zwischen seinen beiden Greifzangen 16.

Mit der Steuereinheit 25 kann ein nicht näher dargestelltes Ein- und/oder Ausgabemittel verbunden sein, so dass Daten und Werte von einer Bedienperson eingegeben bzw. an die Bedienperson ausgegeben werden können. Ferner kann die Steuereinheit 25 einen internen Speicher aufweisen oder mit einem externen Speicher verbunden sein, um Daten auszulesen oder abzuspeichern.

Im dreidimensionalen Arbeitsbereich der Greifeinrichtung 10 ist ferner eine Spanneinrichtung und beispielsgemäß ein Spannfutter 35 einer nicht näher dargestellten Werkzeugmaschine gegenüber dem Befestigungsende 13 des Greifarms 11 unbeweglich angeordnet. Das Spannfutter 35 befindet sich in einem Bearbeitungsbereich 36 der Werkzeugmaschine, der über eine Trennwand 37 vom Greifarm 11 getrennt ist. Die Trennwand 37 weist eine verschließbare Öffnung auf, durch die der Greifarm 11 mit dem Greifer 15 hindurch greifen und das Spannfutter 35 erreichen kann.

Außerhalb des Bearbeitungsbereichs 36 ist im Arbeitsbereich der Greifeinrichtung 10 eine Palette 39 angeordnet, in der Rohlinge 18 oder bearbeitete Werkstücke abgelegt werden können. Es versteht sich, dass auch mehrere Paletten 39 vorhanden sein können.

Die Greifeinrichtung 10 dient dazu, aus der Palette 39 einen Rohling 18 zu entnehmen und zum Spannfutter 35 zu transportieren. Mit der noch leeren Greifzange 16 ergreift der Greifer 15 das noch im Spannfutter 35 befindliche bearbeitete Werkstück und entnimmt dieses. Der Greifer 15 wird gedreht und setzt mit der anderen Greifzange 16 den aus der Palette 39 entnommenen Rohling in das Spannfutter 35 ein. Das bearbeitete Werkstück wird zur Palette 39 zurücktransportiert und währenddessen wird der Rohling 18 im Spannfutter 35 durch die nicht mehr dargestellte Werkzeugmaschine bearbeitet. Das bearbeitete Werkstück wird in der Palette 39 abgelegt und der nächste Rohling 18 wird entnommen. Dieses Verfahren wird zyklisch wiederholt, während die Werkzeugmaschine arbeitet.

Besonders hohe Anforderungen an die Positioniergenauigkeit des Greifers 15 werden beim Einsetzen des Rohlings 18 in das Spannfutter 35 gestellt. Verschleiß oder Beschädigungen am Spannfutter 35 sollen unbedingt vermieden werden. Bei dem hier beschriebenen Ausführungsbeispiel befindet sich die Greifeinrichtung 10 in ihrer Arbeitsposition, wenn der aus der Palette 39 entnommene Rohling 18 in das Spannfutter 35 eingesetzt wird. In dieser Arbeitsposition muss die Positioniergenauigkeit des Rohlings unabhängig davon gegeben sein, wie groß die Gewichtskraft der aktuell vom Greifer 15 getragenen Ladung ist. Bei einigen Anwendungen sind die Rohlinge 18 und die bearbeitenden Werkstücke unterschiedlich groß und unterschiedlich schwer. Durch Elastizitäten des Greifarms 11 kann es beladungsabhängig zu Abweichungen kommen. Solche Abweichungen werden durch das hier beschriebene Verfahren auf einen zulässigen Toleranzbereich beschränkt.

Für den Betrieb der Greifeinrichtung 10 wird zunächst eine Abweichungsfunktion F bestimmt. Die Abweichungsfunktion F gibt die Positionsabweichung des im Greifer 15 gehaltenen Rohlings 18 in der Arbeitsposition des Greifarms 11 abhängig vom Beladungszustand des Greifers 15 an. Aus der Abweichungsfunktion F kann ein Abweichungswert $\Delta z$ ermittelt werden, der anschließend zur Korrektur der über die Positionssignale P1 bis P6 ermittelten Position des Rohlings 18 verwendet werden kann.

Für die Bestimmung der Abweichungsfunktion F wird der Greifer 15 zunächst in einen ersten Beladungszustand gebracht. Beim bevorzugten Ausführungsbeispiel ist der Greifer 15 dabei unbeladen, das heißt in keiner der Greifzangen 16 ist ein Rohling 18 oder ein Werkstück gehalten. In diesem ersten Beladungszustand wird der Greifarm 11 beispielsgemäß in eine Momenterfassungslage bewegt, die in etwa der Lage entspricht, die der Greifarm 11 in seiner Arbeitsposition hat. Bei dem hier beschriebenen Ausführungsbeispiel ist der Greifarm 11 gegenüber seiner Arbeitsposition lediglich um die vertikale Drehachse 27a des ersten Verstellantriebs 26a gedreht. Die Drehstellung um die Drehachse 27a hat jedoch keine oder nur unwesentliche Veränderung der Elastizitäten oder Steifigkeiten des Greifarms 11 zur Folge, so dass dies ohne Auswirkung auf die Bestimmung der Abweichungsfunktion F ist. Der Greifer 15 befindet sich dabei in etwa in der in Figur 4 gezeigten Position in der Nähe des Spannfutters 35.

In der Momenterfassungslage wird durch Betätigen des fünften Verstellantriebs 26e eine erste Drehmomentgröße M1 erfasst, die dem ersten Beladungszustand zugeordnet ist. Als Drehmomentgröße M kann das Drehmoment des Motors des fünften Verstellantriebs 26e oder eine andere das Drehmoment beschreibende Größe gemessen werden, wie beispielsweise der Motorstrom. Die erste Drehmomentgröße M1 kann auch mehrfach hintereinander bestimmt und ein Mittelwert durch bekannte mathematische Verfahren bestimmt werden. Dabei wird das zum Schwenken des Greifers 15 um die Schwenkachse 27e des fünften Verstellantriebs 26e notwendige Drehmoment direkt oder indirekt als erste Drehmomentgröße M1 bestimmt.

Nach dem Bestimmen der ersten Drehmomentgröße M1 wird der Greifarm 11 in seine Messposition bewegt, die schematisch in den Figuren 2 und 3 veranschaulicht ist. Bei dem hier beschriebenen Ausführungsbeispiel ist die Messposition durch ein Anschlagelement 40 vorgegeben, gegen den die zum Einsetzen des Rohlings 18 in das Spannfutter 35 verwendete Greifzange 16 gefahren wird. Als Anschlag 40 kann beispielsweise ein in das Spannfutter 35 eingespannter Körper dienen. Beim Ausführungsbeispiel erfolgt das Anfahren der Messposition vertikal von oben in Richtung der Gewichtskraft des Greifers 15 bzw. dessen Beladung. Vorzugsweise wird der Greifer 15 zunächst über der durch das Anschlagelement 40 definierten Messposition positioniert und anschließend im Wesentlichen vertikal nach unten in die Messposition bewegt. Sobald der Greifer 15 am Anschlag 40 anliegt wird ein erster Positionswert z1 in Z-Richtung, die hier der Vertikalrichtung entspricht, im Koordinatensystem der Greifeinrichtung 10 gemessen. Die Positionsmessung erfolgt anhand der Werte der Positionssensoren 28 der Greifeinrichtung 10. Die Messung dieses Positionswertes in Z-Richtung kann auch mehrfach hintereinander durchgeführt und ein Mittelwert gebildet werden.

Anschließend wird die Beladung des Greifers 15 in einem zweiten Beladungszustand verändert. Beispielsgemäß wird am Greifer 15 die während des Betriebs der Greifeinrichtung 10 maximal mögliche Beladung angebracht. Bei dem hier beschriebenen Ausführungsbeispiel entspricht dies dem Anordnen von zwei Rohlingen 18 mit der größtmöglichen Masse in den beiden Greifzangen 16 des Greifers 15, wie dies in Figur 3 veranschaulicht ist. Im zweiten Beladungszustand wird eine zweite Drehmomentgröße M2 wie zuvor im Zusammenhang mit dem ersten Beladungszustand beschrieben erfasst. Anschließend wird ein zweiter Positionswert z2 in Z-Richtung in der Messposition des Greifarms 11 bestimmt, analog zu der Vorgehensweise im ersten Beladungszustand. Aus dem im ersten Beladungszustand gemessenen ersten Positionswert z1 und dem im zweiten Beladungszustand gemessenen zweiten Positionswert Z2 wird dann jeweils ein erster Abweichungswert $\Delta z1$ bzw. $\Delta z2$ wie folgt berechnet:

$$\Delta z1 = zist - z1$$

$$\Delta z2 = zist - z2,$$

wobei zist der tatsächliche Positionswert des Greifers 15 bzw. Des Rohlings 18 in Z-Richtung ist, wenn sich der Greifarm 11 in seiner Messposition befindet, also wenn beim Ausführungsbeispiel der Greifer 15 am Anschlag 40 anliegt.

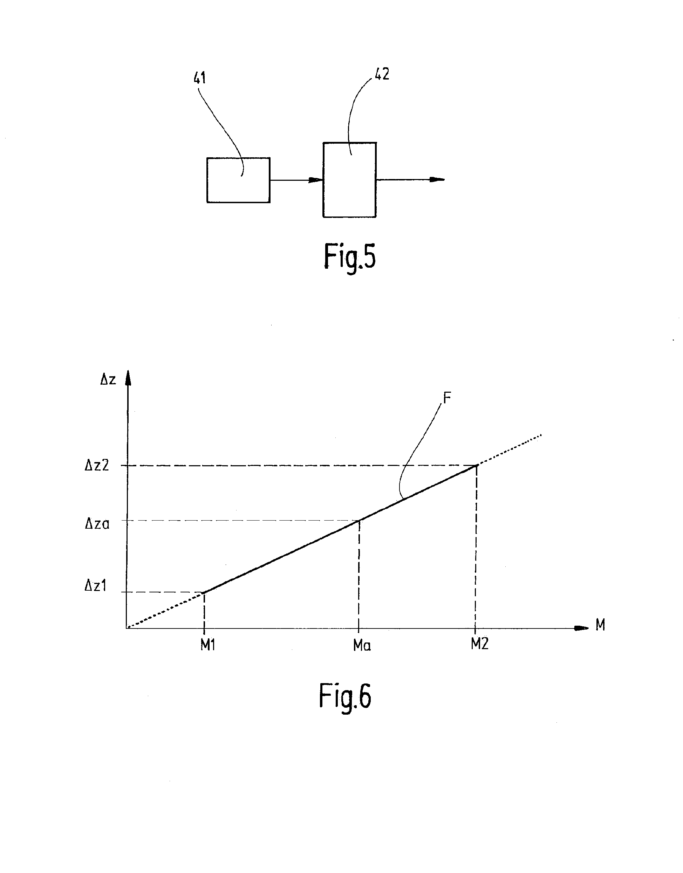

Auf diese Weise erhält man für die Abweichungsfunktion F zwei definierte Punkte, nämlich M1/$\Delta z1$ sowie M2/$\Delta z2$. Es hat sich gezeigt, dass eine lineare Abweichungsfunktion F für den Bereich der Arbeitsposition des Greifarms 11 eine ausreichende Genauigkeit liefert. Außerdem ist eine derart lineare Abweichungsfunktion F sehr einfach aus nur zwei Punkten bestimmbar. Somit ergibt sich aus diesen beiden Punkten die Abweichungsfunktion F, die beispielhaft in Figur 6 dargestellt ist. Die Gültigkeit dieser Abweichungsfunktion kann auf den Bereich zwischen der ersten Drehmomentgröße M1 und der zweiten Drehmomentgröße M2 beschränkt werden, wenn im ersten Beladungszustand der unbeladene Greifer 15 und im zweiten Beladungszustand die maximale zulässige Beladung verwendet wird. Alternativ ist es jedoch auch möglich, beliebige andere unterschiedliche Beladungszustände zu wählen und die Abweichungsfunktion F über den Bereich zwischen den beiden ermittelten Wertepaaren hinaus zu verwenden, wie dies in Figur 6 gepunktet dargestellt ist.

In der Arbeitsposition sind die Glieder 12 des Greifarms 11 im Wesentlichen in derselben Relativlage wie in der Messposition und gegebenenfalls in der Momenterfassungslage. Die Dreh- oder Schwenklagen des zweiten bis sechsten Verstellantriebs 26b bis 26f sind dabei im Wesentlichen identisch. Lediglich Dreh- oder Schwenklagen um vertikale Achsen, wie beispielsweise um die Drehachse 27a des ersten Verstellantriebs 26a am Befestigungsende 13 des Greifarms 11 haben keine oder nur vernachlässigbare Auswirkungen auf die Verformung des Greifarms unter der Last am Greifer 15, so dass diese Drehlagen in der Arbeitsposition, der Messposition und gegebenenfalls der Momenterfassungslage auch unterschiedlich sein können.

Nachdem die Abweichungsfunktion F bestimmt wurde, wird diese in Form einer Gleichung oder einer Tabelle im Speicher der Steuereinheit 25 abgelegt. Beim Positionieren eines Rohlings 18 an der Arbeitsstelle, also im vorliegenden Fall beim Einsetzen eines Rohlings 18 in das Spannfutter 35, wird auf die bereits bestimmte Abweichungsfunktion F zurückgegriffen und der in der Greifeinrichtung 10 sensorisch gemessene Positionswert in Z-Richtung durch einen Korrekturwert $\Delta z$ korrigiert, um eine ausreichend exakte Positionierung des Rohlings 18 zu erreichen. Dabei wird folgendermaßen vorgegangen:

Nachdem der Greifer 15 einen Rohling 18 aus der Palette 39 entnommen hat, wird der Greifarm 11 in seine Momenterfassungslage bewegt. Anschließend erfolgt die Erfassung einer für die aktuelle Beladung des Greifers 15 charakteristischen Drehmomentgröße Ma. Auch hierfür wird wie bei der Bestimmung der Abweichungsfunktion F nur der fünfte Verstellantrieb 26f verwendet.

Nach dem Erfassen der Drehmomentgröße Ma kann anhand der vorgegebenen Abweichungsfunktion F der zugehörige Abweichungswert Δza ermittelt werden. Beim Bewegen des Rohlings in die Arbeitsposition, also beim Einsetzen des Rohlings 18 in das Spannfutter 35, wird der in Z-Richtung gemessene, aktuelle Positionswert durch Addition des ermittelten Abweichungswertes Δza korrigiert, um eine ausreichend genaue Positionierung beim Einsetzen des Rohlings in das Spannfutter 35 zu gewährleisten.

Während der Bestimmung der Drehmomentgrößen M1, M2, Ma befindet sich die Achse 27e des hierfür verwendet fünften Verstellantriebs 26e im Wesentlichen in horizontaler Ausrichtung. Dies erhöht die Genauigkeit des Zusammenhangs zwischen der erfassten Drehmomentgröße M1, M2, Ma und der Gewichtskraft der Beladung des Greifers 15.

Beim Bestimmen der Drehmomentgrößen M1, M2, Ma wird lediglich ein einziger Verstellantrieb 26 eingesetzt. Während die Drehmomentgrößen M1, M2, Ma bestimmt werden, verbleiben alle anderen Verstellantriebe in Ruhe. Im hier beschriebenen Fall wird der Verstellantrieb verwendet, der möglichst nahe am Greifer 15 angeordnet ist. Vorzugsweise befindet sich zwischen dem zur Drehmomentgrößenbestimmung verwendeten Verstellantrieb 26e und dem Greifer 15 maximal ein weiterer Verstellantrieb 26f. Im vorliegenden Fall wurde der sechste Verstellantrieb 26f, dessen Drehachse 27f mittig zwischen den beiden Greifzangen 16 durch den Greifer 15 verläuft, nicht verwendet, weil bei gleichmäßiger Beladung der beiden Greifzangen 16 sozusagen ein Ausgleichsgewicht vorhanden ist und eine Bestimmung einer Drehmomentgröße, die dem Beladungszustand des Greifers 15 entspricht, durch Drehen des Greifers 15 um die Drehachse 27f des sechsten Verstellantriebs 26f nicht erfolgen kann. Aus diesem Grund wurde der dem freien Ende 14 am nächsten angeordnete fünfte Verstellantrieb 26e zur Bestimmung der Drehmomentgrößen M1, M2, Ma verwendet, dessen Dreh- oder Schwenkachse 27e den Greifer 15 nicht durchsetzt.

Jeder der Verstellantriebe 26a bis 26f weist einen Motor 41, vorzugsweise Elektromotor, und ein dem Motor 41 zugeordnetes Getriebe 42 auf, wie dies im Blockschaltbild nach Figur 5 veranschaulicht ist. Dadurch, dass die einzelnen Getriebe 42 der Verstellantriebe 26 eine Gesamtübersetzung bzw. im vorliegenden Fall eine Gesamtuntersetzung bilden, ist die erfassbare Spreizung der Drehmomentgröße M1, M2, Ma bei unterschiedlichen Beladungszuständen für diejenigen Verstellantriebe 26 nicht ausreichend groß, denen zum Greifer 15 hin mehrere weitere Verstellantriebe 26 nachgeschaltet sind.

Im Speicher der Steuereinheit 25 können vorprogrammierte Abläufe für das Bestimmen der Abweichungsfunktion F sowie für das anschließende Positionieren des Rohlings 18 an der Arbeitsposition abgespeichert sein

Die vorliegende Erfindung betrifft ein Verfahren zum Betrieb einer Greifeinrichtung 10. Diese dient dazu, Rohlinge 18 an einer Arbeitsposition zu positionieren, beispielsweise in ein Spannfutter 35 einzusetzen. Hierfür wird bei der Initialisierung der Greifeinrichtung 10 eine Abweichungsfunktion F bestimmt, die ausschließlich für die Arbeitsposition die beladungsabhängige Abweichung der Position des Rohlings 18 in Vertikalrichtung z zwischen der gewünschten Soll-Position und der durch die Greifeinrichtung 10 gemessene Position angibt. Über die Abweichungsfunktion F kann während des Betriebs der Greifeinrichtung 10 beim Positionieren der Rohlinge 18 an der Arbeitsposition ein Abweichungswert Δza bestimmt und die in der Greifeinrichtung 10 gemessene Position um den Abweichungswert Δza korrigiert werden, so dass eine genaue Positionierung des Rohlings 18 ermöglicht ist. Die Greifeinrichtung 10 setzt daher Rohlinge 18 mit ausreichender Genauigkeit innerhalb eines vorgegebenen Toleranzbereichs, beispielsweise fünf bis zehn hundertstel Millimetern, in ein Spannfutter 35 ein, unabhängig von deren Gewicht. Verschleiß und Beschädigungen des Spannfutters 35 sind vermieden.

Bezugszeichenliste:

| | |
|---|---|
| 10 | Greifeinrichtung |
| 11 | Greifarm |
| 12 | Glied v. 11 |
| 13 | Befestigungsende v. 11 |
| 14 | freies Ende v. 11 |
| 15 | Greifer |
| 16 | Greifzange |
| 17 | Zangenschenkel |
| 18 | Rohling |
| 19 | Befestigungsfläche |
| 25 | Steuereinheit |
| 26a | erster Verstellantrieb |
| 26b | zweiter Verstellantrieb |
| 26c | dritter Verstellantrieb |
| 26d | vierter Verstellantrieb |

| 26e | fünfter Verstellantrieb |
|---|---|
| 26f | sechster Verstellantrieb |
| 27a | Drehachse v. 26a |
| 27b | Schwenkachse v. 26b |
| 27c | Schwenkachse v. 26c |
| 27d | Drehachse v. 26d |
| 27e | Schwenkachse v. 26e |
| 27f | Drehachse v. 26f |
| 28 | Positionssensor |
| 35 | Spannfutter |
| 36 | Bearbeitungsbereich |
| 37 | Trennwand |
| 40 | Anschlagelement |
| 41 | Motor |
| 42 | Getriebe |
| A1 - A7 | Ansteuersignal |
| F | Abweichungsfunktion |
| M1 | erste Drehmomentgröße |
| M2 | zweite Drehmomentgröße |
| Ma | aktuelle Drehmomentgröße |
| P1 - P6 | Positionssignal |
| z1 | erster Positionswert |
| z2 | zweiter Positionswert |
| $\Delta z1$ | erster Abweichungswert |
| $\Delta z2$ | zweiter Abweichungswert |
| $\Delta za$ | aktueller Abweichungswert |

**Patentansprüche**

**1.** Verfahren zum Betreiben einer Greifeinrichtung (10), die zum Positionieren eines durch einen Greifer (15) eines Greifarms (11) gehaltenen Werkstücks oder Rohlings (18) dient, wobei der Greifarm (11) mehrere Glieder (12) aufweist, wobei jeweils zwei benachbarte Glieder (12) über jeweils einen Verstellantrieb (26) dreh- oder schwenkbar miteinander verbunden sind, mit folgenden Schritten:

- Bestimmen einer Abweichungsfunktion (F), die die Änderung der Position des Greifers (15) abhängig von dessen Beladung beschreibt, durch mindestens zwei Positionsmessungen mit unterschiedlichen Beladungszuständen des Greifers (15) in einer vorgegebenen Messposition des Greifarms (11).

**2.** Verfahren nach Anspruch 1,
**dadurch gekennzeichnet, dass** das Bestimmen der Abweichungsfunktion (F) mit folgenden Schritten durchgeführt wird:

- Bestimmen einer ersten Drehmomentgröße (M1), die das zum Bewegen des Greifers (15) um die Achse (27e) eines der Verstellantriebe (26e) notwendige erste Drehmoment (M1) in einem ersten Beladungszustand beschreibt, Bewegen des Greifers (15) in eine fest vorgegebene Messposition, Messen eines ersten Positionswertes (z1) im Koordinatensystem des Greifarms (11) und Bestimmen eines ersten Abweichungswertes ($\Delta z1$) zwischen dem gemessenen ersten Positionswert (z1) und dem tatsächlichen Positionswert,
- Bestimmen einer zweiten Drehmomentgröße (M2), die das zum Bewegen des Greifers (15) um die Achse (27e) desselben Verstellantriebs (26e) notwendige zweite Drehmoment (M2) in einem vom ersten Beladungszustand verschiedenen zweiten Beladungszustand beschreibt, Bewegen des Greifers (15) in die Messposition, Messen eines zweiten Positionswertes (z2) im Koordinatensystem des Greifarms (11) und Bestimmen eines zweiten Abweichungswertes ($\Delta z2$) zwischen dem gemessenen zweiten Positionswert (z2) und dem tatsächlichen Positionswert,
- Festlegen einer insbesondere linearen Abweichungsfunktion (F) zwischen der die Beladung am Greifer (15) beschreibenden Drehmomentgröße (M) und dem Abweichungswert ($\Delta z$).

**3.** Verfahren nach Anspruch 1,
**dadurch gekennzeichnet, dass** der Greifer (15) in der Messposition an ein Anschlagelement (40) bewegt wird.

**4.** Verfahren nach Anspruch 3,
**dadurch gekennzeichnet, dass** das Anschlagelement (40) von einem im einem Spannfutter (35) eingespannten Körper gebildet ist.

**5.** Verfahren nach Anspruch 1, **dadurch gekennzeichnet, dass** die Glieder (12) des Greifarms (11) zum Bestimmen der Drehmomentgrößen (M1, M2) in eine vorgegebene Momenterfassungslage gebracht werden.

**6.** Verfahren nach Anspruch 5, **dadurch gekennzeichnet, dass** die Relativposition der Glieder (12) des Greifarms (11) in der Messposition und in der Momenterfassungslage im Wesentlichen gleich ist.

**7.** Verfahren nach Anspruch 1, **dadurch gekennzeichnet, dass** die Abweichungsfunktion (F) für das Positionieren des Rohlings (18) oder Werkstücks nur für eine der Abweichungsfunktion (F) zugeordnete Arbeitsposition des Greiferarms (11) innerhalb seines dreidimensionalen Arbeitsbereichs gilt.

**8.** Verfahren nach Anspruch 1, **dadurch gekennzeichnet, dass** die Achse (27e) des Verstellantriebs (26e) beim Bestimmen der Drehmomentgrößen (M1, M2) im Wesentlichen horizontal ausgerichtet ist.

**9.** Verfahren nach Anspruch 1, **dadurch gekennzeichnet, dass** ausschließlich ein Verstellantrieb (26e) der Greifeinrichtung (10) für das Bestimmen der Drehmomentgrößen (M1, M2) verwendet wird.

**10.** Verfahren nach Anspruch 1, **dadurch gekennzeichnet, dass** zwischen dem für das Bestimmen der Drehmomentgrößen (M1, M2) verwendeten Verstellantrieb (26e) und dem Greifer (15) höchstens ein weiterer Verstellantrieb (26f) für den Greifer (15) vorhanden ist.

**11.** Verfahren nach Anspruch 1, **dadurch gekennzeichnet, dass** der Greifer (15) im ersten Beladungszustand unbeladen ist.

**12.** Verfahren nach Anspruch 1, **dadurch gekennzeichnet, dass** der Greifer (15) im zweiten Beladungszustand mit der während des Betriebs der Greifeinrichtung (10) maximal auftretenden Beladung beladen ist.

**13.** Verfahren zum Aufnehmen und/oder Ablegen eines Werkstücks oder Rohlings (18) an einer Arbeitsposition mit Hilfe einer Greifeinrichtung (10), die einen Greifarm (11) mit mehreren Gliedern (12) aufweist, wobei jeweils zwei benachbarte Glieder (12) über einen Verstellantrieb (26) dreh- und/oder schwenkbar miteinander verbunden sind, und am äußeren freien Ende (14) des Greifarms (11) ein Greifer (15) zum Halten des Rohlings (18) oder Werkstücks vorhanden ist, mit folgenden Schritten:

- Greifen eines Rohlings (18) oder Werkstücks mit dem Greifer,
- Bestimmen einer Drehmomentgröße (Ma), die das zum Bewegen des Greifers (15) mit dem Rohling (18) oder Werkstück um die Achse (27e) eines der Verstellantriebe (26e) notwendige Drehmoment beschreibt,
- Ermitteln eines Abweichungswertes (Δza) für das Positionieren des Rohlings (18) oder Werkstücks an der Arbeitsposition aus einer vorgegebenen Abweichungsfunktion (F) abhängig von der ermittelten Drehmomentgröße (Ma),
- Addieren des ermittelten Abweichungswertes (Δza) zu dem im Koordinatensystem der Greifeinrichtung (10) gemessenen aktuellen Positionswert beim Positionieren des im Greifer (15) gehaltenen Rohlings (18) oder Werkstücks an der Arbeitsposition.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007026114 A1
- DE 10312025 A1